# EUROPÄISCHE PATENTSCHRIFT

(11) **EP 1 511 156 B1**
(45) Veröffentlichungstag und Bekanntmachung des Hinweises auf die Patenterteilung: **16.04.2008**
(21) Anmeldenummer: 04019774.1
(22) Anmeldetag: 20.08.2004
(51) Int. Cl.: H02K 9/14, H02K 11/04

(54) **Optimierte Kühlluftzuführung**
Optimized cooling air guide
Conduite d'air de refroidissement optimisée

(30) Priorität: 26.08.2003 DE 10339585
(43) Veröffentlichungstag der Anmeldung: 02.03.2005
(73) Patentinhaber: WILO AG, 44263 Dortmund (DE)
(72) Erfinder: Schneider, Franka, Dr., 45149 Essen (DE); Löbel, Markus, 58454 Witten (DE); Goronzy, Bernd, 44575 Castrop-Rauxel (DE); Hübner, Jürgen, 44287 Dortmund (DE)
(74) Vertreter: COHAUSZ DAWIDOWICZ HANNIG & SOZIEN

(56) Entgegenhaltungen:
- EP-A- 0 456 169
- FR-A- 1 155 080
- FR-A- 2 377 112
- FR-A- 2 756 676
- PATENT ABSTRACTS OF JAPAN Bd. 1999, Nr. 03, 31. März 1999 (1999-03-31) -& JP 10 341550 A (TOSHIBA CORP), 22. Dezember 1998 (1998-12-22)
- PATENT ABSTRACTS OF JAPAN Bd. 1999, Nr. 13, 30. November 1999 (1999-11-30) -& JP 11 234954 A (TOSHIBA CORP), 27. August 1999 (1999-08-27)
- PATENT ABSTRACTS OF JAPAN Bd. 2002, Nr. 02, 2. April 2002 (2002-04-02) -& JP 2001 275301 A (MATSUSHITA ELECTRIC IND CO LTD), 5. Oktober 2001 (2001-10-05)
- PATENT ABSTRACTS OF JAPAN Bd. 1997, Nr. 07, 31. Juli 1997 (1997-07-31) -& JP 09 088895 A (MITSUBISHI ELECTRIC CORP), 31. März 1997 (1997-03-31)

## Beschreibung

Die Erfindung betrifft einen Elektromotor mit einem außen an der Motoraußenwand angeordneten Kasten zur Aufnahme einer Motorelektronik , und mit einem stirnseitig angeordneten Lüfterrad zur Erzeugung eines im Wesentlichen parallel zur Motorachse gerichteten Luftstromes zur Kühlung der Motoraußenwand, welche Kühlrippen / Lamellen aufweist, wobei das Lüfterrad von einer Lüfterhaube überdeckt ist, die Kühlrippen / Lamellen zumindest teilweise mit einer Abdeckung überdeckt sind, so dass sich zwischen wenigstens zwei Kühlrippen / Lamellen wenigstens ein Luftleitkanal ausbildet, wobei in Luftströmungsrichtung nach der Abdeckung auf, in oder an der Motoraußenwand wenigstens ein Luftleitelement angeordnet ist, welches den Luftstrom, teilweise, derart ablenkt, dass dieser auf eine der Motorwand gegenüberliegende zu kühlende Fläche des Kastens gerichtet ist,

Derartige gattungsgemäße Elektromotoren sind allgemein bekannt, z.B. aus der FR 2 377 112. Dabei ist es häufig vorgesehen, in dem außen an der Motoraußenwand angeordneten Kasten, dem sogenannten Klemmenkasten die Motorelektronik aufzunehmen ,wie beispielsweise einen Frequenzumrichter und die Leistungssteuerung.

Insbesondere sind Motorkonstruktionen bekannt, bei denen ein Klemmenkasten nicht im direkten Kontakt mit der Motoraußenwand stehen, sondern beispielsweise über einen Sockel beabstandete Motoraußenwand an dem Elektromotor montiert sind. Ein Kühlluftstrom, der durch das Lüfterrad eines Elektromotors erzeugt wird, erreicht daher zumeist in nicht ausreichender Weise die wärmeabführenden Elemente am Klemmenkasten, so dass es hier zu einer Überhitzung und zu Defekten kommen kann. Insbesondere kann es vorgesehen sein, einen Frequenzumrichtertyp an unterschiedlichen Elektromotoren zu verwenden, wobei bei diesen unterschiedlichen Elektromotoren jedoch die Kühlluftführung ebenso unterschiedlich sein kann, so dass gegebenenfalls bei dem einen oder anderen Motortypen eine nicht ausreichende Kühlung erreicht wird.

Motoren unterschiedlichen Fabrikats können dementsprechend Unterschiede in der Kühl-Luftdurchführung über den Motor hinweg aufweisen, so dass diese Kühlluftführung unter Umständen sehr ungünstig bezüglich der Kühlung des Frequenzumrichters bzw. der Leistungselektronik innerhalb des Klemmenkastens sein kann. Aufgabe der Erfindung ist es, einen Elektromotor bereit zu stellen, der für eine optimierte Kühlung bzw. Kühlluftführung Sorge trägt, um eine ausreichende Kühlung eines Klemmenkastens und der daran angeordneten Elektronik zu gewährleisten.

Diese Aufgabe wird erfindungsgemäß dadurch gelöst, dass zur Ausbildung einer Abdeckung die Lüfterhaube zumindest abschnittsweise in Motorachsrichtung verlängert ist bis zu dem wenigsten einen Luftleitelement, um wenigstens einen geschlossenen Luftleitkanal bis zum Luftleitelement auszubilden, wobei der Kasten Kühlrippen aufweist, die wenigstens bereichsweise durch eine Abdeckung überdeckt sind, um geschlossene Luftleitkanäle auszubilden und ein Luftleitkanal an der Motoraußenwand über ein Luftleitelement, welches einen Kanalabschnitt bildet, in einen Luftleitkanal am Kasten übergeht.

Derartige erfindungsgemäße Konstruktion kann insbesondere dort Anwendung finden, wo die Klemmenkästen eines Elektromotors in einem leichten Abstand zur Motoraußenwand beispielsweise über einen Sockel mit dem Elektromotor verbunden sind. Der durch das Lüfterrad erzeugte sich im wesentlichen in axialer Richtung ausbreitende Luftstrom, der normalerweise nicht für eine ausreichende Kühlung des Klemmenkastens ausreicht, kann mittels des Luftleitelementes derart abgelenkt werden, das er auf die zu kühlende Fläche des Kastens bzw. des Klemmenkastens gerichtet ist. Somit wird aus dem gesamten Kühlluftstrom der mittels des Elektromotorlüfters erzeugt wird zumindest ein Teilstrom abgezweigt, um eine gezielte Kühlung am Klemmenkasten zu erreichen.

Häufig ist es vorgesehen, dass Elektromotoren auf ihrer Motoraußenwand Kühlrippen bzw. Lamellen aufweisen, um eine Vergrößerung der Kühloberfläche zu erreichen. Bei einer derartigen Konstruktion kann es bevorzugt vorgesehen sein, dass das Luftleitelement auf, in/zwischen oder an diesen Kühlrippen bzw. Lamellen angeordnet ist, die auf/an der Motoraußenwand in Motorachsrichtung verlaufen.

Hierbei kann es beispielsweise auch vorgesehen sein, dass ein erfindungsgemäßer Elektromotor ein erfindungsgemäßes Luftleitelement als separates Bauteil aufweist, welches nachträglich an den Kühlrippen bzw. Lamellen befestigbar ist, beispielsweise durch eine Klemm- oder Schnappvorrichtung. So kann auch eine Nachrüstung bestehender Elektromotoren mit einer optimierten Kühlluftführung erfolgen.

Bei der Anbringung der Luftleitelemente auf, in/zwischen oder an den Kühlrippen/lamellen hat weiterhin den Vorteil, dass die Kühlrippen bzw. Lamellen als im wesentlichen in radialer Richtung in der Motorwand aufstehende Wände eine Kanalisierung des vom Lüfterrad erzeugten Luftstromes vorzunehmen. Aus diesem im wesentlichen in Motorachsrichtung kanalisierten Luftstrom kann somit mit einem erfindungsgemäßen Luftleitelement, welches beispielsweise in Form eines Prallbleches oder einer Art Spoiler ausgebildet sein kann, eine gezielte Ablenkung des Luftstromes aus der axialen Richtung auf die Außenwand des Klemmenkastens erfolgen.

Hierbei ist es vorgesehen, dass auch die zu kühlende Fläche des Kastens mit Kühlrippen/lamellen versehen ist, wobei diese insbesondere ebenfalls bevorzugterweise in Motorachsrichtung verlaufen. Es kann so gewährleistet sein, dass die Geschwindigkeitskomponente der Kühlluft, die in Motorachsrichtung liegt auch nach der Luftumlenkung innerhalb der Kühlrippen des Klemmenkastens erhalten bleibt. Auf diese Weise wird die Geschwindigkeit des Luftstromes nur unmaßgeblich verringert, so dass ein optimaler Kühlungseffekt nicht nur an der Motoraußenwand, sondern auch an der Kühlfläche des Klemmenkastens erreicht wird.

Dabei ist es hier vorgesehen, dass das Lüfterrad von einer Lüfterhaube überdeckt ist, welche die Kühlrippen/lamellen auf oder an der Motoraußenwand zumindest teilweise überdeckt, so dass sich zwischen zwei Lamellen bzw. Kühlrippen und der Lüfterhaube ein im wesentlichen allseitig geschlossener Luftleitkanal ausgebildet, wobei dann in Luftdurchströmungsrichtung nach der Lüfterhaube wenigstens ein oben genanntes erfindungsgemäßes Luftleitelement angeordnet ist.

Durch die Ausbildung des Elektromotors mit einer Lüfterhaube ergeben sich dementsprechend wenigstens ein bevorzugt mehrere abgeschlossene Luftleitkanäle, durch die sichergestellt ist, dass die Strömungsgeschwindigkeit des Kühlluftstromes nicht in verschiedene Richtungen verpufft, sondern in axialer Richtung der Motorachse optimal erhalten bleibt. Wird sodann am Ende eines solchen durch die Lüfterhaube und die Rippen gebildeten Kanals das Luftleitelement angeordnet, so kann der Kühlluftstrom optimal mit seiner gesamten Kraft bzw. Strömungsgeschwindigkeit umgelenkt werden.

Dabei ist es weiterhin vorgesehen, dass die Lüfterhaube zumindest abschnittsweise in Motorachsrichtung verlängert ist bis zu dem Luftleitelement, um wenigstens einen geschlossenen Luftleitkanal bis zu diesem Luftleitelement auszubilden. Es wird somit sichergestellt, dass zumindest zwischen einigen Kühlrippen bzw. Lamellen auf der Motoraußenwand geschlossene Kanäle ausgebildet werden, in denen der Kühlluftstrom optimal bis zum Luftleitelement kanalisiert bleibt.

Um weiterhin sicher zu stellen, dass ein abgelenkter Kühlluftstrom an gegebenenfalls unterschiedlichen Stellen des Klemmenkastens zur Kühlung eingesetzt werden kann, kann es in einer Weiterbildung der Erfindung vorgesehen sein, dass ein Luftleitelement auf der Motoraußenwand bzw. in, an oder zwischen den Kühlrippen bzw. Lamellen in Motorachsrichtung verstellbar/verschiebbar angeordnet ist. Es kann so bedarfsgerecht eine Einstellung des Luftleitelementes hinsichtlich seiner Position in Motorachsrichtung vorgenommen werden, um zu gewährleisten, dass der Kühlluftstrom an der Stelle der größten Wärmeentwicklung dem Klemmenkasten bzw. dessen Kühlfläche trifft. Ebenso kann es gegebenenfalls vorgesehen sein bei einem Luftleitelement, welches als Prallfläche oder in Form eines Spoilers ausgebildet ist, den Neigungswinkel gegenüber dem im Motorachsrichtung anströmenden Kühlluftstrom einzustellen.

Ebenso wie es vorgesehen ist, die Kühlrippen auf der Motoraußenwand des Elektromotors zumindest bereichsweise mit einer Abdeckung zu versehen, die durch eine Verlängerung der Lüfterhaube gegeben ist, ist es genauso vorgesehen, die Kühlrippen des zu kühlenden Kastens mit einer Abdeckung zu versehen, um auch dort geschlossene Luftleitkanäle auszubilden.

So geht ein Luftleitkanal an der Motoraußenwand über ein Luftleitelement, welches einen Kanalabschnitt bildet in einen Luftleitkanal am Kasten über. Dieser Übergang kann insbesondere derart stattfinden, dass sich ein geschlossener Luftleitkanal von der Motoraußenwand zur Kühlfläche des Kastens ergibt.

Bei einer derartigen Konstruktion bleibt dementsprechend die Kühlluft über ihren gesamten Weg vom Lüfterrad an der Motoraußenwand bzw. den dort gebildeten Luftleitkanälen bis in die Luftleitkanäle am Kasten erhalten. Es kann somit eine optimale Geschwindigkeit und ein optimaler Volumenstrom auch am zu kühlenden Klemmenkasten realisiert werden.

Beispiele, die das Verständnis der Erfindung erleichtern, sind in den nachfolgenden Figuren näher erläutert. Es zeigen:
Figur 1 ein erstes Beispiel mit einem Luftleitelement zur Umleitung des Kühlluftstromes eines Motorventilators;
Figur 2 ein weiteres Beispiel mit verlängerter Lüfterhaube zur Ausbildung eines Luftleitkanals vor dem Luftleitelement.

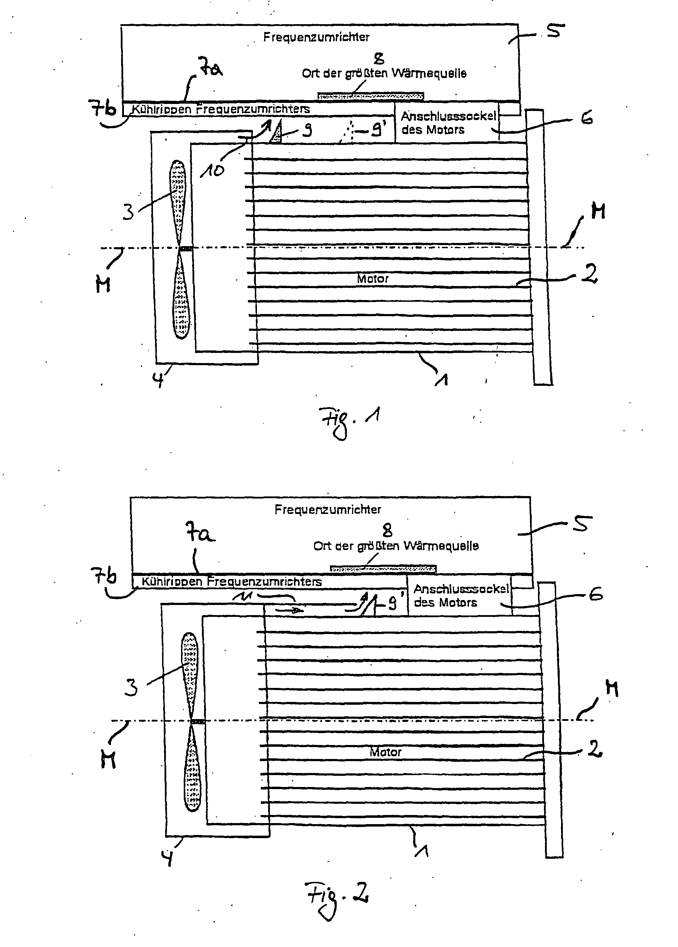

Die Figuren 1 und 2 zeigen im wesentlichen zwei identische Elektromotoren lediglich mit Unterschieden in der Kühlluftführung.

Dargestellt ist jeweils ein Elektromotor 1, der auf seiner Motoraußenwand eine Vielzahl in radialer Richtung aufstehender und in Motorachsrichtung verlaufender Kühlluftrippen 2 aufweist. Linksseitig des Elektromotors 1 ist ein Ventilator bzw. Lüfterrad 3 angeordnet, dass von einer Lüfterhaube 4 überdeckt wird. Mittels des Lüfterrades 3 wird ein Kühlluftstrom in Motorachsrichtung erzeugt, der sich im wesentlichen durch die Kühlrippen 2 über die Motoraußenwand fortsetzt und so für eine ausreichende Kühlung des Motors Sorge trägt.

In diesem Beispiel ist über einen Anschlusssockel 6 auf der Motoraußenwand des Elektromotors ein Klemmenkasten 5 angeordnet, der beispielsweise eine Frequenzumrichterelektronik 8 beinhaltet, bei der es zur ordnungsgemäßen Funktion einer ausreichenden Wärmeabfuhr bedarf.

Aus diesem Grunde ist am Ort der größten Wärmequelle wie beispielsweise der Leistungselektronik des Frequenzumrichters die hier auf der der Motoraußenwand zuweisenden Unterseite des Klemmenkastens angeordnet ist ebenfalls eine Kühlverippung vorgesehen. Die Kühlrippen 7, die an der der Motoraußenwand gegenüberliegenden zu kühlenden Fläche des Klemmenkastens 5 angeordnet sind, verlaufen hierbei bevorzugt in der gleichen Motorachsrichtung wie die Kühlrippen 2 des Elektromotors.

In der Figur 1 wird deutlich, dass mittels eines Luftleitelementes 9 aus dem Kühlluftstrom des Lüfterrades 3 zumindest ein Teilluftstrom derart abgelenkt werden kann, wie es durch den Pfeil 10 in der Figur 1 dargestellt ist. So kann zumindest ein Teil des Kühlluftstromes durch die Ablenkung in die Kühlrippen 7 des Klemmenkastens umgelenkt werden.

In der Figur 1 wird deutlich, dass der gemäß dem Pfeil 10 umgelenkte Kühlluftstrom mitunter nicht exakt dem Ort der größten Wärmequelle 8 in optimaler Weise trifft, so dass die Kühlluftzuführung an die zu kühlende Fläche des Klemmenkasten zwar verbessert jedoch bei dieser Ausführung noch nicht optimal ist.

In der Figur 1 ist es weiterhin gepunktet dargestellt, dass es bevorzugt vorgesehen sein kann das Luftleitelement 9 verstellbar beispielsweise verschieblich innerhalb der Kühlluftrippen anzuordnen. Eine alternative Position 9' des Luftleitelementes würde grundsätzlich dazu führen, dass der abgelenkte Kühlluftstrom den Ort der größten Wärmequelle 8 besser trifft und somit zu einer optimierten Kühlung führt. Bei dem in der Figur 1 dargestellten Beispiel ist jedoch zu beachten, dass mangels einer Kanalisierung des Kühlluftstromes zwischen dem Ort maximaler Luftgeschwindigkeit direkt am Flügelrad es zu Verlusten bei der Strömungsgeschwindigkeit kommt auf dem Weg vom Flügelrad bis zur alternativen verschobenen Position 9' des Luftleitelementes. So mag dann zwar bei dieser Ausführung der Ort der größten Wärmequelle besser erreicht werden, jedoch ist bei dieser Ausführung voraussichtlich die Luftgeschwindigkeit bzw. der Volumenstrom nicht mehr ausreichend.

Die Figur 2 zeigt ein Beispiel bei dem zumindest bereichsweise die Kühlrippen 2 des Elektromotors mit einer Abdeckung 11 versehen sind, so dass der durch das Lüfterrad 3 erzeugte Kühlluftstrom durch einen sich zwischen zwei Kühlrippen 2 und der Abdeckung 11 ergebenden Kühlluftkanal optimal kanalisiert bleibt, so dass die Geschwindigkeitskomponente in axialer Richtung erhalten bleibt bis das die Luft auf das an der alternativen Position 9' angeordnete Luftleitelement prallt und abgelenkt wird in Richtung des Ortes der größten Wärmequelle.

Die Abdeckung 11 kann beispielsweise durch eine abschnittsweise Verlängerung der Lüfterhaube 4 realisiert sein. Es kann auch vorgesehen sein, ein separates Abdeckelement auf die Kühlrippen 2 und die Lüfterhaube 4 anzusetzen um die gewünscht Anzahl von Kanälen zu erreichen.

In einem Beispiel kann es vorgesehen sein das Luftleitelement beispielsweise auch in einer Schienenführung verschieblich innerhalb der Kühlluftrippen 2 des Elektromotors anzuordnen. Ebenso kann das Luftleitelement beliebig verschieblich oder in diskreten Schritten auf der Motoraußenwand angeordnet werden. In einer Weiterbildung kann es dafür vorgesehen sein, dass sich die Abdeckung 11 in ihrer Länger automatisch an den Abstand zwischen dem Luftleitelement 9 bzw. 9' von der Lüfterhaube 4 anpasst. Dies kann beispielsweise durch eine Art teleskopierbare Abdeckung 11 erreicht werden.

Mit den dargestellten Beispielen, auf die die Erfindung nicht zu beschränken ist, kann eine optimierte Kühlluftzuführung insbesondere zu einem Ort der größten Wärmequelle am Klemmenkasten eines Elektromotors erreicht werden, wofür erfindungsgemäß mittels eines Luftleitelementes zumindest ein Teilstrom aus der Kühlluft des Elektromotors in die Richtung des Klemmenkastens abgelenkt wird.

## Patentansprüche

1. Elektromotor (1) mit einem außen an der Motoraußenwand angeordneten Kasten (5) zur Aufnahme einer Motorelektronik (8), und mit einem stirnseitig angeordneten Lüfterrad (3) zur Erzeugung eines im Wesentlichen parallel zur Motorachse (M) gerichteten Luftstromes zur Kühlung der Motoraußenwand, welche äußere im Wesentlichen parallel zur Motorachse (m) angeordnete Kühlrippen (2) / Lamellen aufweist, wobei das Lüfterrad (3) von einer Lüfterhaube (4) überdeckt ist, die Kühlrippen (2) / Lamellen zumindest teilweise mit einer Abdeckung (11) überdeckt sind, so dass sich zwischen wenigstens zwei Kühlrippen / Lamellen (2) wenigstens ein Luftleitkanal ausbildet, wobei in Luftströmungsrichtung nach der Abdeckung auf, in oder an der Motoraußenwand wenigstens ein Luftleitelement (9,9') angeordnet ist, welches den Luftstrom, teilweise, derart ablenkt, dass dieser auf eine der Motorwand gegenüberliegende zu kühlende Fläche (7a) des Kastens (5) gerichtet ist, **dadurch gekennzeichnet, dass** zur Ausbildung einer Abdeckung (11) die Lüfterhaube (4) zumindest abschnittsweise in Motorachsrichtung verlängert ist bis zu dem wenigsten einen Luftleitelement (9,9'), um wenigstens einen geschlossenen Luftleitkanal bis zum Luftleitelement (9,9') auszubilden, wobei der Kasten (5) Kühlrippen (7) aufweist, die wenigstens bereichsweise durch eine andere Abdeckung überdeckt sind, um geschlossene Luftleitkanäle auszubilden und ein Luftleitkanal an der Motoraußenwand über ein Luftleitelement (9,9'), welches einen Kanalabschnitt bildet, in einen Luftleitkanal am Kasten (5) übergeht.

2. Elektromotor nach Anspruch 1, **dadurch gekennzeichnet, dass** sich ein geschlossener Luftleitkanal von der Motoraußenwand zur Kühlfläche (7a) des Kastens (5) ergibt.

3. Elektromotor nach einem der vorherigen Ansprüche, **dadurch gekenntzeichnet dass** das Luftleitelement (9,9') auf, in/zwischen oder an Kühlrippen / Lamellen (2) angeordnet ist, die auf/an der Motoraußenwand in Richtung der Motorachse (M) verlaufen.

4. Elektromotor nach einem der vorherigen Ansprüche, **dadurch gekennzeichnet, dass** ein Luftleitelement (9,9') auf der Motoraußenwand in Motorachsrichtung verstellbar/verschiebbar angeordnet ist, insbesondere durch verstellbare/verschiebbare Anordnung auf den Kühlrippen (2).

5. Elektromotor nach einem der vorherigen Ansprüche, **dadurch gekennzeichnet, dass** ein durch die Luftleitkanäle gerichteter Kühluftstrom mittels eines Luftleitelementes (9,9') zwischen die Kühlrippen (7) der Kühlfläche des Kastens (5) leitbar ist, wobei die Luftströmungsrichtung in Motorsachsrichtung erhalten bleibt.

## Claims

1. Electric motor (1) with a box (5) arranged externally on the external wall of the motor for taking motor electronics (8) and with an impeller fan (3) arranged on the face for producing a stream of air directed essentially parallel to the axis of the motor (M) for cooling the external wall of the motor, which has external cooling fins (2) / blades arranged essentially parallel to the axis of the motor (M), in which the impeller fan (3) is covered by a fan guard (4), the cooling fins (2) /blades are covered at least partly by a covering (11), so that at least one air conduction channel is formed between at least two cooling fins / blades (2), in which at least one air conduction element (9, 9') is arranged in or on the external wall of the motor in the direction of the stream of air after the covering, which deflects part of the stream of air in such a way that it is directed to an area (7a) of the box (5) to be cooled, which is opposite the wall of the motor, **characterised in that** to form a covering (11) the fan guard (4) is extended at least in sections in the direction of the axis of the motor to at least one air conduction element (9, 9'), in order to form at least one closed air conduction channel to the air conduction element (9, 9), in which the box (5) has cooling fins (7), which are covered at least in areas by another covering, in order to form closed air conduction channels and an air conduction channel on the external wall of the motor passes over into an air conduction channel on the box (5) via an air conduction element (9, 9'), which forms a channel section.

2. Electric motor according to claim 1, **characterised in that** there is a closed air conduction channel from the external wall of the motor to the cooling area (7a) of the box (5).

3. Electric motor according to one of the previous claims, **characterised in that** the air conduction element (9, 9') is arranged in/between or on cooling fins / blades (2), which run in the direction of the axis of the motor (M) on the external wall of the motor,

4. Electric motor according to one of the previous claims, **characterised in that** an air conduction element (9, 9') is arranged on the external wall of the motor so that it can be adjusted/moved in the direction of the axis of the motor, particularly by arranging it on the cooling fins (2) so that it can be adjusted/moved.

5. Electric motor according ton one of the previous claims, **characterised in that** a stream of cooling air directed through the air conduction channels can be conducted by means of an air conduction element (9, 9') between the cooling fins (7) of the cooling area of the box (5), in which the direction of the stream of air remains maintained in the direction of the axis of the motor.

## Revendications

1. Moteur électrique (1) avec un boîtier (5), disposé à l'extérieur au niveau de la paroi externe du moteur et permettant de réceptionner un système électronique (8) pour le moteur, et avec une hélice (3) disposée côté frontal pour produire un flux d'air dirigé essentiellement parallèlement à l'axe du moteur (M) afin de refroidir la paroi externe du moteur, laquelle comprend des ailettes de refroidissement (2) / lamelles disposées à l'extérieur essentiellement parallèlement à l'axe du moteur (M), sachant que l'hélice (3) est recouverte par un capot de ventilation (4), que les ailettes de refroidissement (2) / lamelles sont recouvertes au moins partiellement par un couvercle (11), de sorte que se forme entre au moins deux ailettes de refroidissement / lamelles (2) au moins un canal de conduite d'air, sachant que, dans la direction d'écoulement de l'air vers le couvercle, au moins un élément de conduite d'air (9, 9') est disposé sur, dans ou au niveau de la paroi externe du moteur, lequel élément dévie partiellement le flux d'air de manière à ce que celui-ci soit dirigé sur une surface (7a) du boîtier (5) qui est opposée à la paroi du moteur et qui doit être refroidie, **caractérisé en ce que**, pour réaliser un couvercle (11), le capot de ventilation (4) est rallongé au moins dans des sections dans la direction de l'axe du moteur, jusqu'à le au moins un élément de conduite d'air (9, 9'), afin de réaliser au moins un canal de conduite d'air fermé jusqu'à l'élément de conduite d'air (9, 9'), sachant que le boîtier (5) comporte des ailettes de refroidissement (7) qui sont recouvertes au moins dans des zones par un autre couvercle afin de réaliser des canaux de conduite d'air fermés, et qu'un canal de conduite d'air au niveau de la paroi externe du moteur se transforme en canal de conduite d'air au niveau du boîtier (5) au-delà d'un élément de conduite d'air (9, 9'), lequel forme un tronçon de canal.

2. Moteur électrique selon la revendication 1, **caractérisé en ce qu'**un canal de conduite d'air fermé est réalisé depuis la paroi externe du moteur jusqu'à la surface de refroidissement (7a) du boîtier (5).

3. Moteur électrique selon l'une quelconque des revendications précédentes, **caractérisé en ce que** l'élément de conduite d'air (9, 9') est disposé sur, dans/entre ou au niveau des ailettes de refroidissement/lamelles (2) qui s'étendent sur/au niveau de la paroi externe du moteur dans la direction de l'axe du moteur (M).

4. Moteur électrique selon l'une quelconque des revendications précédentes, **caractérisé en ce qu'**un élément de conduite d'air (9, 9') est disposé de manière réglable/mobile sur la paroi externe du moteur dans la direction de l'axe du moteur, notamment au moyen d'un agencement réglable/mobile sur les ailettes de refroidissement (2).

5. Moteur électrique selon l'une quelconque des revendications précédentes, **caractérisé en ce qu'**un flux d'air de refroidissement dirigé au travers des canaux de conduite d'air peut être conduit au moyen d'un élément de conduite d'air (9, 9') entre les ailettes de refroidissement (7) de la surface de refroidissement du boîtier (5), sachant que la direction d'écoulement de l'air est conservée dans la direction de l'axe du moteur.
